(19) Europäisches Patentamt / European Patent Office / Office européen des brevets

(11) EP 4 092 092 B1

(12) # EUROPÄISCHE PATENTSCHRIFT

(45) Veröffentlichungstag und Bekanntmachung des Hinweises auf die Patenterteilung:
**18.02.2026 Patentblatt 2026/08**

(21) Anmeldenummer: **22171269.8**

(22) Anmeldetag: **03.05.2022**

(51) Internationale Patentklassifikation (IPC):
***C09J 7/21*** *(2018.01)*

(52) Gemeinsame Patentklassifikation (CPC):
**C09J 7/21;** C09J 2203/302; C09J 2400/263; C09J 2467/006

(54) **KLEBEBAND ZUM UMMANTELN VON LANGGESTRECKTEM GUT WIE INSBESONDERE KABELSÄTZEN UND VERFAHREN ZUR UMMANTELUNG**

ADHESIVE TAPE FOR SHEATHING ELONGATED GOODS, IN PARTICULAR CABLE SETS AND SHEATHING METHOD

BANDE ADHÉSIVE PERMETTANT D’ENVELOPPER UNE MARCHANDISE ALLONGÉE TELLE QUE, EN PARTICULIER LES FAISCEAUX DE CÂBLES ET PROCÉDÉ D’ENVELOPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.05.2021 DE 102021205196**

(43) Veröffentlichungstag der Anmeldung:
**23.11.2022 Patentblatt 2022/47**

(73) Patentinhaber: **tesa SE**
**22848 Norderstedt (DE)**

(72) Erfinder: **KERBER, Kristin**
**22399 Hamburg (DE)**

(74) Vertreter: **tesa SE**
**Hugo-Kirchberg-Straße 1**
**22848 Norderstedt (DE)**

(56) Entgegenhaltungen:
**EP-A2- 0 995 782** **WO-A1-2021/023810**
**BR-A- PI0 504 419** **DE-A1- 102014 119 526**
**DE-U1- 202019 100 588** **DE-U1- 202021 106 836**
**US-A- 4 830 188** **US-A1- 2012 315 473**

- **ANONYMOUS: "Recyceltes PET als Tr�germaterial", COROPLAST-INTEMETSEITE NEWS (COROPLAST-TAPE.COM), 16 March 2021 (2021-03-16), pages 1 - 5, XP093057157, Retrieved from the Internet <URL:https://www.coroplast-group.com/de/newsroom/artikel/recyceltes-pet-als-traegermaterial/> [retrieved on 20230623]**
- **ANONYMOUS: "Von der Flasche zum vernadelten Textil", NEWSLETTER MAGAZINE, 1 July 2016 (2016-07-01), pages 1 - 6, XP093134489, Retrieved from the Internet <URL:https://www.groz-beckert.com/de/aktuelles/newsletter/felting/2016/m2_felting_rpet.html> [retrieved on 20240223]**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 092 092 B1

## Beschreibung

Die Erfindung bezieht sich auf ein Klebeband zum Ummanteln von langgestrecktem Gut wie insbesondere Kabelsätzen in Automobilen und Verfahren zur Ummantelung.

Seit geraumer Zeit werden in der Industrie Klebebänder zur Herstellung von Kabelbäumen verwendet. Die Klebebänder werden zum Bündeln einer Vielzahl von elektrischen Leitungen vor dem Einbau oder in bereits montiertem Zustand eingesetzt, um beispielsweise den Raumbedarf des Leitungsbündels durch Bandagieren zu reduzieren und zusätzlich Schutzfunktionen wie Schutz gegen mechanische und/oder thermische Beanspruchung zu erreichen.

Gängige Formen von Klebebändern umfassen Folien- oder Textilträger, die in der Regel einseitig mit Haftklebemassen beschichtet sind. Klebebänder zum Ummanteln von langgestreckten Gütern sind beispielsweise aus der EP 1 848 006 A2, der DE 10 2013 213 726 A1 und der EP 2 497 805 A1 bekannt.

DE 10 2014 119526 A1 offenbart ein Kabelwickelband zur Kabelbandagierung im Automobilbau mit einem textilen Träger und einer zumindest einzeitig darauf aufgebrachten Haftklerbeschichtung. Der textile Vliesträger besteht aus einem Nähfaservlies auf PET Basis mit einem Flächengewicht von 60-82 g/m2.

EP 0 995 782 A2 beschäftigt sich, mit einen Kabelwickelband mit einem textilen Träger.Gemäß Beispiel 1 wird als Träger ein Stapelfaservlies mit einem Flächengewicht von 200 g/m2 eingesetzt, das zu 80 % aus Polyesterreißfasern und zu 20 % aus Bikomponenten-Schmelzfasern besteht. Auf einer Seite des Vliesträgers befindet sich eine Naturkautschukhaftklebemasse.

Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt. Besonderer Schutz gegen eine Schlageinwirkung wird durch abriebfeste Gewebe mit zusätzlich aufgebrachten Beschichtungen erreicht.

Neben den klassischen Fahrzeugen mit Verbrennungsmotoren gewinnen Hybridelektrokraftfahrzeuge (englisch Hybrid Electric Vehicle, HEV) und Elektroautos mit Batterie (Battery Electric Vehicle, BEV) zunehmend an Bedeutung.

Ein Hybridelektrokraftfahrzeug ist ein Fahrzeug mit Hybridantrieb, also ein Elektrofahrzeug, das von mindestens einem Elektromotor sowie einem weiteren Energiewandler angetrieben wird und Energie sowohl aus seinem elektrischen Speicher (Akku) als auch einem zusätzlich mitgeführten Kraftstoff bezieht. Ein vollelektrisches Fahrzeug wird ausschließlich von einem batteriebetriebenen Elektromotor angetrieben und benötigt daher keinen fossilen Kraftstoff. Der Akku wird über externe Netzteile geladen.

In allen Kraftfahrzeugen steigt die Menge der elektrischen Leitungen durch vermehrten Einsatz elektrischer Komponenten, während gleichzeitig der Bauraum für den Leitungssatz besonders in Kleinkraftfahrzeugen zunehmend kleiner wird. Auch die Konstruktion von Elektrofahrzeugen und Hybridfahrzeugen erfordert mehr elektrische Leitungen. Die Verwendung von elektrischen Spannungen über 42 V erfordert einen zusätzlichen Schutz der Leitungen, der auch über den normalen Gebrauch des Fahrzeuges hinaus einen Schutz in speziellen Unfallsituationen sicherstellen muss.

Die Prüfung und Klassifizierung von Klebebändern für die Kabelummantelung erfolgt in der Automobilindustrie nach umfangreichen Normenwerken wie zum Beispiel der LV 312-1 "Schutzsysteme für Leitungssätze in Kraftfahrzeugen, Klebebänder; Prüfrichtlinie" (10/2009) als gemeinsame Norm der Firmen Daimler, Audi, BMW und Volkswagen oder der Ford-Spezifikation ES-XU5T-1 A303-aa (Revision 09/2009) "Harness Tape Performance Specification). Im Folgenden werden diese Normen verkürzt mit LV 312 beziehungsweise mit Ford-Spezifikation bezeichnet. Aktuell liegt den Messungen zumeist der Änderungsvorschlag zur VW 60360-1 "Schutzsysteme für Leitungssätze - Klebebänder": 2019-10 zugrunde.

Verbreitet sind Kabelwickelbänder mit Folien- und Textilträger, die in der Regel einseitig mit unterschiedlichen Haftklebemassen beschichtet sind. Diese Kabelwickelbänder müssen vier Hauptanforderungen erfüllen.

a. leichte Abwickelbarkeit:
Das in Rollenform dargereichte Produkt muss für eine einfache Verarbeitung leicht abwickelbar sein.

b. Kabelverträglichkeit:
Die Kabelisolierung darf nicht durch den Einfluss des Klebebandes in Kombination mit erhöhter Temperatur über längeren Zeitraum verspröden. Unterschieden wird hier nach der LV 312 zwischen vier Temperaturklassen T1 bis T4, entsprechend 80 °C (auch Temperaturklasse A genannt), 105 °C (auch Temperaturklasse B (105) genannt), 125 °C (auch Temperaturklasse C genannt) und 150 °C (auch Temperaturklasse D genannt), denen die umwickelten Kabel ohne Versprödung über 3000 h standhalten müssen. Es versteht sich von selbst, dass die Temperaturklassen T3 und T4 höhere Ansprüche an das Klebeband stellen als die unteren Klassen T1 und T2. Über die Einstufung T1 bis T4 entscheidet sowohl das Kabelisolierungsmaterial, als auch Haftklebemasse und Trägertyp.

c. Chemikalienverträglichkeit beziehungsweise Verträglichkeit mit Medien im Motorraum

d. Gute Klebkraft

Die Klebkraft muss bei Biegebeanspruchung auf unebenen, ungleichmäßigen Untergründen wie Kabelsträngen, Wellrohren und Abzweigungen ausreichend sein. Dazu kommen noch Biege- und Zugbeanspruchung bei der Herstellung, dem Einbau und der späteren Nutzung im Motorraum eines Automobils oder auch in der Karosserie mit ständiger Biegebeanspruchung beim Öffnen von Türen.

Da das Ende des Klebebandes im Idealfall auf der eigenen Rückseite verklebt wird, muss eine gute Sofortklebkraft (Tack) auf diesem Untergrund vorhanden sein, damit nicht zu Beginn ein Abflaggen des Klebebandes auftritt. Um dauerhaft ein Flagging freies Produkt zu gewährleisten, müssen die Verankerung auf dem Untergrund und die innere Festigkeit der Klebemasse soweit ausgeprägt sein, dass die Klebeverbindung auch unter dem Einfluss von Spannung (Zug- und Biegebeanspruchung) Bestand hat.

Beim Wickeln eines Kabelsatzes wird das Klebeband von gar nicht bis vollständig überlappend um das Kabel verklebt, das im Regelfall einen kleinen Radius hat, so dass das Klebeband sehr stark gekrümmt wird. Am Ende eines Wickelabschnittes wird üblicherweise das Band vorwiegend auf die eigene Rückseite gewickelt, so dass der Überlappungsgrad nahezu vollständig ist, ähnlich der üblichen Darreichungsform als Klebebandrolle, wo die Klebemasse ebenfalls auf der eigenen Rückseite verklebt ist. Beim Abflaggen wirken statische Kräfte zum Beispiel durch die Biegesteifigkeit des Trägers und die Wickelspannung, die dazu führen können, dass sich die offenen Klebebandenden in unerwünschter Weise aufstellen, ähnlich einer beginnenden selbsttätigen Abwicklung. Die Abflaggresistenz ist also die Fähigkeit der Klebmasse, dieser statischen Kraft zu widerstehen.

Unter Flagging wird - bei einem um einen Körper gewickelten Klebeband - die Neigung eines Klebebandendes verstanden abzustehen. Die Ursache ergibt sich aus der Kombination von Haltekraft durch den Klebstoff, der Steifigkeit des Trägers und des Durchmessers des Kabelsatzes.

Der Nachweis der Flaggingbeständigkeit von Wire Harnessing (WH)-Kabelwickelbändern wird über die TFT-Methode (Threshold Flagging Time) geführt. Als Zielgröße für ein einwandfrei flaggingfreies Gewebeprodukt wird dabei ein Grenzwert von deutlich über 1000 min TFT, vorzugsweise über 2000 min TFT, definiert.

Die Realisierung von leicht abrollbaren Klebebändern unter gleichzeitiger Beibehaltung guter klebtechnischer Eigenschaften stellt eine große Herausforderung dar, weil beide Eigenschaften sich auszuschließen scheinen. Denn die wesentlichen Kriterien bei einseitig klebenden Kabelwickelbändern mit angepasster Abrollkraft und ausreichend hoher Klebkraft stehen dabei in krassem Gegensatz zueinander. Während für gute Klebkraftwerte und ein damit verbundenes geringes Flaggingpotential ein gutes Auffließ- und Verankerungsverhalten der Haftklebemasse vorausgesetzt wird, sind diese Kriterien für ein angenehmes Abrollverhalten eher hinderlich.

Da bei textilen Trägermaterialien eine Reduzierung der Abrollkraft durch Releasemittel nur unter hohem Kostenaufwand zu realisieren ist, werden die Klebebandlagen direkt aufeinander gewickelt und die Klebmasse verklebt dabei mit der Rückseite der jeweils unteren Bandlage. Um ein Abwickeln ohne Klebmasserückstände auf der Trägerrückseite zu gewährleisten, werden höchste Ansprüche an ein ausgewogenes Verhältnis von Kohäsion und Adhäsion gestellt.

So weisen beispielsweise Kabelwickelbänder mit Haftklebemassen auf Basis von Naturkautschuk zumeist eine gute Abflaggresistenz auf, doch sie zeigen eine über die Lagerzeit sowie bei zunehmenden Temperaturen ansteigende Abrollkraft. Zudem erfüllen sie nur die unteren Temperaturklassen für die Kabelverträglichkeit.

Die WO 2006/015816 A1 offenbart Haftklebemassen auf Basis von Synthesekautschuk mit Photoinitiatoren. EP 1 431 360 A2 offenbart auf sich selbst wickelbare Klebebänder mit einem thermisch verfestigten Vlies mit einem Flächengewicht von 10 bis 50 g/m$^2$ und UV-vernetztem Acrylatklebstoff. Bekannt sind auch Gewebeklebebänder, die auf einer vernetzten Acrylat-Hotmeltmasse, meist auf Reinacrylat, basieren und nach LV 312 in die Temperaturklasse D (150 °C) eingestuft sind. Diese weisen eine geringe Masseverankerung auf und führen bei glatten Trägeroberflächen zu Masseumspulungen. Auch Gewebeklebebänder, die auf einer Acrylatdispersionsmasse basieren und nach LV 312 in die Temperaturklasse D (150 °C) eingestuft sind, sind bekannt. Ebenfalls sind Vliesklebebänder bekannt, die auf einer vernetzten Acrylat-Hotmeltmasse basieren, meist Reinacrylat, und die nach LV 312 in die Temperaturklasse C (125 °C) eingestuft sind. Dabei besitzen alle Gewebeprodukte die gleiche Klebemasse, welche durch Masseauftrag und UV-Vernetzung auf die jeweiligen Bedürfnisse eingestellt wird. Nachteilig sind bei ihrer Applikation auf dem Kabelsatz die merklich abstehenden Bandenden, wenn diese Klebebänder des Standardsortiments an kritischen Wicklungen wie Abzweigungen, Übergängen, kleine Durchmesser, etc., angebracht werden. Ihr Abrollkraftniveau lässt sich zwar mithilfe des gewählten Masseauftrags und vor allem UV-Vernetzung gut steuern, jedoch geht dies mit den unerwünschten Nebeneffekten deutlich abnehmender Klebkräfte und einem unkalkulierbaren Flaggingrisiko einher. Zudem können Acrylat-Hotmelt-Klebemassen nur unter erschwerten Bedingungen abgemischt werden, um Harze oder Füllstoffe einzuarbeiten. Vor dem Hintergrund einer Kostenersparnis ist der Einsatz von Füllstoffen beim Massedesign bekannt.

Weichmacher werden Kunststoffen wie Kabelummantelungen oder -umhüllungen zugesetzt, um diese dauerhaft flexibel, geschmeidig und elastisch zu machen. Weichmacher können schwerflüchtige Harze, Ester oder Öle sein.

Die Funktion der Weichmacher ist es, den thermoplastischen Bereich zu niedrigeren Temperaturen zu verschieben. Bekannte Weichmacher umfassen beispielsweise DOP (Dioctylphthalat, Di-2-ethylhexylphthalat), DINP

(Diisononylphthalat), TOTM (Trioctyl-trimellitat) oder DIDP (Diisodecylphthalat).

Zur Anwendung kommen häufig äußere Weichmacher, die nicht kovalent in das Polymer eingebunden werden, sondern über polare Gruppen mit dem Polymer in Wechselwirkung treten, um die Beweglichkeit der polymeren Ketten zu ermöglichen wie beispielsweise Diethylhexylphthalat (DEHP), Dioctylphthalat (DOP) als Weichmacher für PVC und Elastomere. Weitere Weichmacher umfassen Zitronensäure basierte Weichmacher wie Zitronensäuretriethylester oder Adipinsäure basierte Weichmacher wie Diethylhexyladipat und Diethyloctyladipat. Die Diffusion dieser äußeren Weichmacher aus den Kunststoffen der Kabelisolierungen kann durch die erfindungsgemäßen Klebebänder mit Haftklebemassen deutlich vermindert werden.

Unter den inneren Weichmachern werden jene verstanden, die während der Copolymerisation zugegen sind und einpolymerisiert werden, und anschließend nicht aus dem Polymer ausdiffundieren können.

Acrylatklebemassen weisen in der Regel eine sehr hohe Affinität gegenüber den gängigen PVC-Weichmachern auf, was im Falle der sogenannten Monomer-Weichmacher wie zum Beispiel DINP, DIDP oder TOTM zu einer starken Migrationstendenz eben dieser führt. Bekannt ist zudem, dass beim Einsatz von PVC-isolierten Kabelleitungen es über die Zeit und vor allem unter Temperaturbelastung zu einer starken Weichmachermigration bis zur Einstellung eines Gleichgewichts zwischen Isolierung und Klebeband beziehungsweise Klebemasse kommt. Es findet im Ergebnis eine unerwünschte Versprödung der Kabelumhüllungen/Kabelsilosierungen statt. In Kombination mit Alterungseffekten (Oxidation, Weichmacherabgabe in die Umgebung, Abbau, mechanische Belastungen, etc.) führt eine erhöhte Weichmachermigration zu einem frühzeitigen Versagen der Kabelisolierung durch Verspröden. Dies ist auch unter dem Stichwort Sprödlücke bei Weich-PVC bekannt.

Zur Verminderung oder Vermeidung der Weichmachermigration sind in erster Linie zwei Maßnahmen bekannt: So kann a) das Gleichgewicht im Vorfeld eingestellt werden, indem der Klebmasse bereits im Herstellprozess Weichmacher zugegeben wird. Dies führt jedoch häufig zu einschneidenden Veränderungen der klebtechnischen Eigenschaften, bis hin zum völligen Kohäsionsversagen der Masse. Alternativ kann b) zur Errichtung einer wirksamen Barriere eine engmaschige Vernetzung der Klebmasse vorgenommen werden, was jedoch auch wieder dramatische Auswirkungen auf die Klebtechnik haben kann, oder es können feindisperse Füllstoffe, die in der Lage sind ein Netzwerk aufzubauen, eingesetzt werden.

Der vorliegenden Erfindung liegt die Aufgabe zugrunde, ein Klebeband zur Verfügung zu stellen, dessen Abrollkräfte über eine größere Bandbreite einstellbar sind, also das eine leichte Abwickelbarkeit aufweist, das eine gute Kabelverträglichkeit über alle genannten Temperaturklassen für Anwendungen im Bereich der Kabelbandagierung (Wire Harnessing-Anwendungen (WH)), also eine ausgezeichnete Kompatibilität mit allen gängigen Kabelisolierungen aufweist, insbesondere gemäß des Referenzspektrums an Kabeln in der LV 312, und das das besonders einfache, preiswerte und schnelle Ummanteln von langgestrecktem Gut wie Kabelsätzen in Automobilen ermöglicht.

Gelöst wird diese Aufgabe durch ein Klebeband, wie es im Hauptanspruch niedergelegt ist.

Gegenstand der Unteransprüche sind dabei vorteilhafte Weiterbildungen des Klebebands und Verfahren zur Anwendung des Klebebands.

Demgemäß betrifft die Erfindung ein Klebeband insbesondere zum Umwickeln von Kabeln, umfassend einen textilen Träger und eine auf mindestens einer Seite des Trägers aufgebrachten Haftklebemasse. gemäß Anspruch 1.

Als Träger eignen sich prinzipiell alle textilen Trägermaterialien, bevorzugt sind Nähwirkstoffe, also textile Flächengebilde, die durch Maschenbildung eingebundener Wirkfäden in ein flächiges Grundmaterial hergestellt sind, und besonders bevorzugt Vlies-Nähwirkstoffe, also textile Flächengebilde mit Faservlies als Grundmaterial, die durch Maschenbildung eingebundener Wirkfäden verfestigt sind (beispielsweise Maliwatt).

Der Begriff "textiler Träger" beziehungsweise "textiles Flächengebilde" umfasst alle bekannten textilen Träger wie Gestricke, Gelege, Bänder, Geflechte, Nadelflortextilien, Filze, Gewebe (umfassend Leinwand-, Köper und Atlasbindung), Gewirke (umfassend Kettenwirkware und Strickware) oder Vliese, wobei unter "Vlies" zumindest textile Flächengebilde gemäß EN 29092 (1988) sowie Nähwirkvliese und ähnliche Systeme zu verstehen sind.

Zu den Nähwirkstoffen gehören auch Fadenlagen-Nähwirkstoffe, also textile Flächengebilde mit einer oder mehreren übereinander gelegten Fadenlage(n) als Grundmaterial, die durch Maschenbildung eingebundener Wirkfäden verfestigt sind, zum Beispiel Florofol, Polfaden-Nähwirkstoffe, also textile Flächengebilde, bei denen Wirkfäden als Pol geformt in ein Grundmaterial mittels Maschenbildung eingebunden sind, zum Beispiel Malipol und Schusspol-Nähwirkstoffe, also textile Flächengebilde, bei denen als Pol geformte unvermaschte Fäden durch Wirkfäden mittels Maschenbildung an ein Grundmaterial angebunden sind, zum Beispiel Schusspol.

Weiterhin bevorzugt sind auch Vlieswirkstoffe, also textile Flächengebilde, die ohne Verwendung von Fäden durch Bildung von Fasermaschen aus vorgelegtem Faservlies hergestellt sind. Dazu zählen Faser-Vlieswirkstoffe, also textile Flächengebilde aus Faservlies mit einer verfestigenden Fasermaschenseite und einer Seite mit horizontal zur Fasermaschenschicht angeordneten Fasern, wobei Fasern aus dem Faservlies zu Fasermaschen geformt werden, zum Beispiel Malivlies, Polfaser-Vlieswirkstoffe, also textile Flächengebilde aus Faservlies mit oder ohne Verwendung eines Grundmaterials, die aus einer Fasermaschenseite sowie einer Polfaserseite mit nahezu senkrecht zur Fasermaschenschicht angeordneten Fasern bestehen, zum Beispiel Voltex, Kunit oder Maliknit, Maschen-Vlieswirkstoffe, also textile

Flächengebilde aus einem Polfaser-Vlieswirkstoff, aus dessen Polfasern eine zweite Fasermaschenschicht gebildet ist, zum Beispiel Multiknit oder Optiknit.

Die obigen Definitionen sind der DIN 61211:2005-05 entnommen.

Ebenfalls können Abstandsgewebe und -gewirke mit Kaschierung verwendet werden. Abstandsgewirke stellen doppelflächige Textilien dar, bei denen die kettengewirkten Warenflächen durch abstandshaltende Verbindungsfäden, sogenannte Polfäden, auf Distanz gehalten werden. Es handelt sich bei den Abstandsgewirken um Maschenwaren beziehungsweise Gewirke, die um die dritte Dimension erweitert wurden. Abstandsgewebe besitzen ebenfalls zwei im Abstand angeordnete Gewebeschichten, die durch Filamente bzw. Fäden oder Fasern auf Abstand gehalten werden. Derartige Abstandsgewebe werden in der EP 0 071 212 B1 offenbart.

Als Vliesstoffe kommen verfestigte Stapelfaservliese und auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malimo" der Firma Karl Mayer, ehemals Malimo, hergestellt und sind unter anderem bei der Firma Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunit oder Multiknit verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Malimo" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt. Als Ausgangsprodukt für ein Multiknit dienen in der Regel ein beziehungsweise zwei nach dem Kunit-Verfahren hergestellte einseitig vermaschte Polfaser-Vlieswirkstoffe. Im Endprodukt sind beide Vliesstoffoberseiten durch Faservermaschungen zu einer geschlossenen Oberfläche geformt und durch nahezu senkrecht stehende Fasern miteinander verbunden. Die zusätzliche Einbringbarkeit weiterer durchstechbarer Flächengebilde und/oder streufähiger Medien ist gegeben.

Schließlich sind auch Nähvliese besonders geeignet. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies (auch als Maliwatt bekannt) sind Nähwirkmaschinen des Typs "Malimo" der Firma Karl Mayer bekannt.

Geeignet sind auch Nadelvliese. Beim Nadelvlies wird ein Faserflor zu einem Flächengebilde mit Hilfe von mit Widerhaken versehenen Nadeln. Durch wechselndes Einstechen und Ausziehen der Nadeln wird das Material auf einem Nadelbalken verfestigt, wobei sich die Einzelfasern zu einem festen Flächengebilde verschlingen. Die Anzahl und Ausführungsform der Vernadelungspunkte (Nadelform, Eindringtiefe, beidseitiges Vernadeln) entscheiden über Stärke und Festigkeit der Fasergebilde, die in der Regel leicht, luftdurchlässig und elastisch sind.

Weiterhin vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 Gew.-% und 50 Gew.-% der Fasern des Vlieses Schmelzfasern sind, insbesondere zwischen 5 Gew.-% und 40 Gew.-% der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses durch Nadelung, Vernähung, Luft- und/oder Wasserstrahlbearbeitung vorverfestigt wird.

In einem zweiten Schritt erfolgt die Thermofixierung, wobei die Festigkeit des Vlieses durch das Auf-oder Anschmelzen der Schmelzfasern nochmals erhöht wird.

Für die Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemitteln oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, StyrolButadien-Systeme, PVC u.ä. sowie deren Copolymere. Im Normalfall handelt es sich dabei um anionische oder nicht-ionogen stabilisierte Dispersionen, in besonderen Fällen können aber auch kationische Dispersionen von Vorteil sein.

Die Art des Bindemittelauftrages kann gemäß dem Stand der Technik erfolgen und ist beispielsweise in Standardwerken der Beschichtung oder der Vliestechnik wie "Vliesstoffe" (Georg Thieme Verlag, Stuttgart, 1982) oder "Textiltechnik-Vliesstofferzeugung" (Arbeitgeberkreis Gesamttextil, Eschborn, 1996) nachzulesen.

Für mechanisch vorverfestigte Vliese, die bereits eine ausreichende Verbundfestigkeit aufweisen, bietet sich der einseitige Sprühauftrag eines Bindemittels an, um Oberflächeneigenschaften gezielt zu verändern.

Neben dem sparsamen Umgang mit dem Bindemittel wird bei derartiger Arbeitsweise auch der Energiebedarf zur Trocknung deutlich reduziert. Da keine Abquetschwalzen benötigt werden und die Dispersionen vorwiegend in dem oberen Bereich des Vliesstoffes verbleiben, kann eine unerwünschte Verhärtung und Versteifung des Vlieses weitgehend verhindert werden.

Für eine ausreichende adhäsive Verfestigung des Vliesträgers ist im allgemeinen Bindemittel in der Größenordnung von 1 % bis 50 %, insbesondere 3 % bis 20 %, bezogen auf das Gewicht des Faservlieses, zuzugeben.

Die Zugabe des Bindemittels kann bereits bei der Vliesherstellung, bei der mechanischen Vorverfestigung oder aber in einem gesonderten Prozessschritt erfolgen, wobei dieser in-line oder off-line durchgeführt werden kann. Nach der Bindemittelzugabe muss temporär für das Bindemittel ein Zustand erzeugt werden, in dem dieses klebend wird und adhäsiv die Fasern verbindet - dies kann während der Trocknung zum Beispiel von Dispersionen, aber auch durch Erwärmung erreicht werden, wobei über flächige oder partielle Druckanwendung weitere Variationsmöglichkeiten gegeben sind. Die Aktivierung des Bindemittels kann in bekannten Trockenkanälen, bei geeigneter Bindemittelauswahl aber auch mittels Infrarotstrahlung, UV-Strahlung, Ultraschall, Hochfrequenzstrahlung oder dergleichen erfolgen.

Eine weitere Sonderform der adhäsiven Verfestigung besteht darin, dass die Aktivierung des Bindemittels durch Anlösen oder Anquellen erfolgt. Prinzipiell können hierbei auch die Fasern selbst oder zugemischte Spezialfasern die Funktion des Bindemittels übernehmen. Da für die meisten polymeren Fasern derartige Lösemittel jedoch aus Umweltgesichtspunkten bedenklich beziehungsweise problematisch in ihrer Handhabung sind, wird dieses Verfahren eher selten angewandt.

Vorteilhaft und zumindest bereichsweise kann der Träger eine ein- oder beidseitig glattgeschliffene Oberfläche aufweisen, vorzugsweise jeweils eine vollflächig glattgeschliffene Oberfläche. Die glattgeschliffene Oberfläche mag gechintzt sein, wie es beispielsweise in der EP 1 448 744 A1 im Detail erläutert wird.

Des Weiteren kann der Träger zur Verdichtung in einem Walzwerk kalandert werden. Vorzugsweise laufen die beiden Walzen gegenläufig und mit der gleichen Umfangsgeschwindigkeit, so dass der Träger gepresst und verdichtet wird.

Wenn die Umfangsgeschwindigkeit der Walzen differiert, dann wird der Träger zusätzlich glattgeschliffen.

Der Träger kann ein Gewebe sein. Besonders bevorzugte Gewebe sind wie folgt aufgebaut:

- die Fadenzahl in der Kette 10 bis 60/cm beträgt
- die Fadenzahl im Schuss 10 bis 40/cm beträgt
- die Kettfäden ein Garngewicht zwischen 40 und 400 dtex, insbesondere zwischen 44 und 330 dtex, besonders bevorzugt von 167 dtex besitzen
- die Schussfäden ein Garngewicht zwischen 40 und 660 dtex, insbesondere zwischen 44 und 400 dtex, besonders bevorzugt von 167 dtex besitzen

Gemäß einer weiteren vorteilhaften Ausführungsform der Erfindung beträgt die Fadenzahl in der Kette 40 bis 50/cm, vorzugsweise 44/cm.

Gemäß einer weiteren vorteilhaften Ausführungsform der Erfindung beträgt die Fadenzahl im Schuss 18 bis 22/cm, vorzugsweise 20/cm.

Gemäß einer weiteren vorteilhaften Ausführungsform der Erfindung handelt es sich bei dem Gewebe um ein Polyestergewebe oder ein Mischgewebe aus Polyester und Polyamid oder Viskose.

Weiter bevorzugt beträgt die Dicke des Gewebes maximal 300 $\mu$m, besonders bevorzugt 170 bis 230 $\mu$m, ganz besonders bevorzugt 190 bis 210 $\mu$m.

Der Träger weist gemäß einer weiteren vorteilhaften Ausführungsform der Erfindung ein Flächengewicht von bis zu 200 $g/m^2$ auf, bevorzugt 100 bis 150 $g/m^2$.

Als Ausgangsmaterialien für das Trägermaterial des Klebebandes kommen (Chemie)Fasern (Stapelfaser oder Endlosfilament) aus recyceltem Polyethylenterephthalat zum Einsatz.

Der Anteil der recycelten Fasern in dem Trägermaterial beträgt mindestens 50 Gew.-%, vorzugsweise mehr als 50 Gew.-%, weiter vorzugsweise 70 Gew.-% oder mehr, weiter vorzugsweise 90 Gew.-% oder mehr, weiter vorzugsweise 100 Gew.-%.

Die zugemischte Charge an (Chemie)Fasern (Stapelfaser oder Endlosfilament) umfasst synthetische Polymere, auch synthetische Fasern genannt, aus Polyester (zum Beispiel Polyethylenterephthalat), Polyamid, Polyimid, Aramid, Polyolefin, Polyacrylnitril oder Glas, oder (Chemie)Fasern aus natürlichen Polymeren wie zellulosische Fasern (Viskose, Modal, Lyocell, Cupro, Acetat, Triacetat, Cellulon), wie Gummifasern, wie Pflanzeneiweißfasern und/oder wie Tiereiweißfasern und/oder natürliche Fasern aus Baumwolle, Sisal, Flachs, Seide, Hanf, Leinen, Kokos oder Wolle vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern in der zweiten Charge eingesetzt werden. Des Weiteren sind Garne, gefertigt aus den angegebenen Fasern, ebenfalls geeignet.

Die zusätzlichen Nähfäden, die beispielsweise bei einem Vlies-Nähwirkstoff erforderlich sind, können aus den genannten Polymeren bestgehen. Bevorzugt sind Nähfäden aus (recyceltem) Polyethylenterephthalat oder Polyamid.

Bei Geweben oder Gelegen können einzelne Fäden aus einem Mischgarn hergestellt werden. In der Regel sind die Kettfäden und die Schussfäden jedoch jeweils sortenrein ausgebildet. Die Kettfäden und/oder die Schussfäden können zu 100 Gew.-% aus synthetischen Fäden aus recyceltem Polyethylenterephthalat bestehen. Möglich ist auch, dass nur die Kettfäden oder nur die Schussfäden zu 100 Gew.-% aus synthetischen Fäden aus recyceltem Polyethylenterephthalat bestehen, wobei der Anteil der recycelten Fasern im Gewebe mindestens 50 Gew.-% betragen muss.

Die Garne oder Fäden der Gewebe können als Filamente vorliegen. Im Sinne dieser Erfindung wird unter einem Filament ein Bündel paralleler, gerader Einzelfasern/Einzelfilamente verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen verallgemeinernd nur noch der Begriff Filament verwendet.

Das Filament kann texturiert oder glatt und punktverfestigt oder unverfestigt vorliegen.

Als Material für den textilen Träger wird recyceltes Polyethylenterephthalat verwendet aufgrund der hervorragenden Alterungsbeständigkeit und der hervorragenden Medienbeständigkeit gegenüber Chemikalien und Betriebsmitteln wie Öl, Benzin, Frostschutzmittel u.ä. Darüber hinaus hat recyceltes Polyethylenterephthalat den Vorteil, dass es zu einem sehr abriebfesten und temperaturbeständigen Träger führt, was für den speziellen Einsatzzweck zur Bündelung von Kabeln in Automobilen und beispielsweise im Motorraum von besonderer Wichtigkeit ist.

Die Fasern aus recyceltem Polyethylenterephthalat werden insbesondere hauptsächlich aus recycelten PET-Flaschen und gegebenenfalls aus recycelten Sekundärprodukten der Polyester-Industrie hergestellt. Die Wiederverwendung der benutzten PET-Rohstoffe machen die Träger zu nachhaltigen, umweltschonenden Produkten. Die Rohstoffe werden in diesem Fall weder einer emissionserzeugenden Abfallverwertung zugeführt noch belasten sie die Umwelt in Form von Plastik im Ozean oder in der Landschaft.

Zur Aufbereitung der Fasern wird das Rohmaterial, insbesondere die PET-Flaschen, mechanisch gewaschen, ähnlich dem Waschvorgang in einer Waschmaschine.

Danach wird das Rohmaterial mechanisch zerkleinert - es entstehen die sogenannten "Flakes". Diese Flakes werden anschließend aufgeschmolzen und zu Fasern verarbeitet.

Die Fasern, insbesondere diejenigen, die zur Vliesbildung eingesetzt werden, haben vorzugsweise eine Faserstärke von 2 bis 5 denier und/oder eine Faserlänge von 30 bis 90 mm.

Die Nähfadenanzahl liegt vorzugsweise im Bereich von 15 bis 25 Fäden/ 25 mm.

Vorteilhaft liegt das Flächengewicht des textilen Trägers zwischen 30 g/m$^2$ und 300 g/m$^2$, wobei die beiden genannten Grenzwerte explizit von der Bereichsangabe umfasst sind (dies gilt für alle folgenden aufgeführten Parameterbereiche mutatis mutandis ebenso),weiter vorteilhaft zwischen 50 g/m$^2$ und 200 g/m$^2$, besonders vorteilhaft zwischen 50 g/m$^2$ und 150 g/m$^2$, ganz besonders vorteilhaft zwischen 70 g/m$^2$ und 130 g/m$^2$.

Bei Geweben beträgt das Flächengewicht bevorzugt 100 g/m$^2$ bis 150 g/m$^2$, insbesondere 130 g/m$^2$. Bei Vliesen beträgt das Flächengewicht bevorzugt 50 g/m$^2$ bis 200 g/m$^2$, weiter bevorzugt 70 g/m$^2$ bis 180 g/m$^2$.

Weiter vorzugsweise weisen die textilen Träger eine Biegesteifigkeit im Bereich von 0 bis 30 mN/60 mm als Rohträger (MD, machine direction) auf, optional von 2 bis 30 mN/60 mm als Rohträger (MD), woraus sehr gute flaggingfreie Produkte erhalten werden.

Der Klebemasseauftrag, bezogen auf die Trägerfläche, liegt zwischen 40 und 160 g/m$^2$, vorzugsweise zwischen 50 und 100 g/m$^2$, weiter vorzugsweise zwischen 60 und 90 g/m$^2$.

Für die Klebemasse kann auf alle bekannten Klebemassensysteme zurückgegriffen werden. Neben Natur- oder Synthesekautschuk basierten Klebemassen sind insbesondere Silikonklebemassen sowie Polyacrylatklebemassen verwendbar.

Sofern auf den freiliegenden Oberflächen des ersten oder des zweiten Trägers weitere Klebemassenschichten vorhanden sind, können diese auch aus den im Folgenden Klebemassen gewählt werden.

Vorzugsweise ist die Klebemasse eine Haftklebemasse, also eine Klebemasse, die bereits unter relativ schwachem Andruck eine dauerhafte Verbindung mit fast allen Haftgründen erlaubt und nach Gebrauch im Wesentlichen rückstandsfrei vom Haftgrund wieder abgelöst werden kann. Eine Haftklebemasse wirkt bei Raumtemperatur permanent

haftklebrig, weist also eine hinreichend geringe Viskosität und eine hohe Anfassklebrigkeit auf, so dass sie die Oberfläche des jeweiligen Klebegrunds bereits bei geringem Andruck benetzt. Die Verklebbarkeit der Klebemasse beruht auf ihren adhäsiven Eigenschaften und die Wiederablösbarkeit auf ihren kohäsiven Eigenschaften.

Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Besonders bevorzugt ist eine Haftklebemasse in Form einer getrockneten Polymerdispersion, wobei das Polymer aufgebaut ist aus:

(a) 95,0 bis 100,0 Gew.-% n-Butylacrylat und/oder 2-Ethylhexylacrylat
(b) 0,0 bis 5,0 Gew.-% eines ethylenisch ungesättigten Monomers mit einer Säure- oder Säureanhydridfunktion

Vorzugsweise besteht das Polymer aus 95,0 bis 99,5 Gew.-% n-Butylacrylat und/oder 2-Ethylhexylacrylat und 0,5 bis 5 Gew.-% eines ethylenisch ungesättigten Monomers mit einer Säure- oder Säureanhydridfunktion, weiter vorzugsweise aus 97,0 oder 98,0 Gew.-% bis 99,0 Gew.-% n-Butylacrylat und/oder 2-Ethylhexylacrylat und 1,0 bis 2,0 Gew.-% oder 3 Gew.-% eines ethylenisch ungesättigten Monomers mit einer Säure- oder Säureanhydridfunktion.

Neben den aufgeführten Acrylatpolymeren können der Haftklebemasse neben gegebenenfalls vorhandenen Restmonomeren zusätzlich Klebrigmacher und/oder Zuschlagstoffe wie Lichtschutz- oder Alterungsschutzmittel zugesetzt werden.

Insbesondere sind keine weiteren Polymere wie Elastomere in der Haftklebemasse enthalten, das heißt, die Polymere der Haftklebemasse bestehen nur aus den Monomeren (a) und (b) in den angegebenen Mengenverhältnissen.

Bevorzugt bildet n-Butylacrylat das Monomer (a).

Als Monomer (b) kommen vorteilhaft in Betracht zum Beispiel Acrylsäure, Methacrylsäure, Itaconsäure, Maleinsäure, Fumarsäure und/oder Maleinsäureanhydrid. Bevorzugt ist (Meth-)acrylsäure der Formel I,

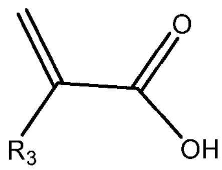

(I)

wobei $R^3$ = H oder $CH_3$ ist, bevorzugt wird gegebenenfalls die Mischung aus Acrylsäure oder Methacrylsäure verwendet. Besonders bevorzugt ist Acrylsäure.

Gemäß einer besonders bevorzugten Variante weist das Polymer die folgende Zusammensetzung auf:

(a) 95,0 bis 100,0 Gew.-%, vorzugsweise 95,0 bis 99,5 Gew.-%, weiter vorzugsweise 98,0 bis 99,0 Gew.-% n-Butylacrylat und
(b) 0,0 bis 5,0 Gew.-%, vorzugsweise 0,5 bis 5,0 Gew.-%, weiter vorzugsweise 1,0 bis 2,0 Gew.-% Acrylsäure

Die Polymerdispersion wird hergestellt durch das Verfahren der Emulsionspolymerisation der genannten Komponenten. Beschreibungen dieses Verfahrens sind zum Beispiel zu finden in "Emulsion Polymerization and Emulsion Polymers" von Peter A. Lovell and Mohamed S. El-Aasser - Wiley-VCH 1997 - ISBN 0-471-96746-7 oder in EP 1 378 527

B1.

Bei der Polymerisation ist es nicht auszuschließen, dass nicht alle Monomere zu Polymeren umgesetzt werden. Dabei ist es naheliegend, dass der Restmonomergehalt möglichst klein sein soll. Bevorzugt werden Klebemassen umfassend die Polymerdispersion mit einem Restmonomerengehalt von kleiner gleich 1 Gew.-%, insbesondere kleiner gleich 0,5 Gew.-% (bezogen auf die Masse der getrockneten Polymerdispersion) bereitgestellt.

Unter einem "Klebharz" wird entsprechend dem allgemeinem Fachmannverständnis ein oligomeres oder polymeres Harz verstanden, das die Autoadhäsion (den Tack, die Eigenklebrigkeit) der Haftklebemasse im Vergleich zu der keinen Klebharz enthaltenden, ansonsten aber identischen Haftklebemasse erhöht.

Der Einsatz von Klebrigmachern zur Steigerung der Klebkräfte von Haftklebemassen ist grundsätzlich bekannt. Dieser Effekt stellt sich auch ein, wenn der Klebmasse bis zu 15 Gewichtsteile (entspricht < 15 Gewichtsteile), beziehungsweise 5 bis 15 Gewichtsteile Klebrigmacher (bezogen auf die Masse der getrockneten Polymerdispersion) hinzugefügt werden. Bevorzugt werden 5 bis 12, weiter bevorzugt 6 bis 10 Gewichtsteile Klebrigmacher (bezogen auf die Masse der getrockneten Polymerdispersion) hinzugefügt.

Als Klebrigmacher, auch als Klebharze bezeichnet, sind prinzipiell alle bekannten Stoffklassen geeignet. Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von Rohstoffen wie zum Beispiel $\alpha$- oder $\beta$-Pinen, aromatische Harze wie Cumaron-Inden-Harze oder Harze auf Basis Styrol oder $\alpha$-Methylstyrol wie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit, um nur einige zu nennen. Bevorzugt werden Harze ohne leicht oxidierbare Doppelbindungen wie Terpenphenolharze, aromatische Harze und besonders bevorzugt Harze, die durch Hydrierung hergestellt sind wie zum Beispiel hydrierte Aromatenharze, hydrierte Polycyclopentadienharze, hydrierte Kolophoniumderivate oder hydrierte Polyterpenharze. Bevorzugt sind Harze auf Basis von Terpenphenolen und Kolophoniumestern. Ebenfalls bevorzugt sind Klebharze mit einem Erweichungspunkt oberhalb von 80 °C gemäß ASTM E28-99 (2009). Besonders bevorzugt sind Harze auf Basis von Terpenphenolen und Kolophoniumestern mit einem Erweichungspunkt oberhalb von 90 °C gemäß ASTM E28-99 (2009). Die Harze werden zweckmäßigerweise in Dispersionsform eingesetzt. Sie lassen sich so problemlos mit der Polymerdispersion feinverteilt mischen.

Besonders bevorzugt ist die Variante, bei der der Haftklebemasse keinerlei Klebharze zugesetzt sind.

Insbesondere nicht zugesetzt werden der Haftklebemasse die folgenden Substanzen:

- Kohlenwasserstoffharze (zum Beispiel Polymere auf Basis ungesättigter $C_5$- oder $C_9$-Monomere)
- Terpenphenolharze
- Polyterpenharze auf Basis von Rohstoffen wie zum Beispiel $\alpha$- oder $\beta$-Pinen
- aromatische Harze wie Cumaron-Inden-Harze oder Harze auf Basis Styrol oder $\alpha$-Methylstyrolwie Kolophonium und seine Folgeprodukte, zum Beispiel disproportioniertes, dimerisiertes oder verestertes Kolophonium, zum Beispiel Umsetzungsprodukte mit Glycol, Glycerin oder Pentaerythrit

Wegen der besonderen Eignung als Klebemasse für Klebebänder von automobilen Kabelsätzen in Hinblick auf die Foggingfreiheit sind lösungsmittelfreie Acrylat-Hotmeltmassen zu bevorzugen, wie sie in DE 198 07 752 A1 sowie in DE 100 11 788 A1 näher beschrieben sind.

Unter Fogging (siehe DIN 75201 A) wird der Effekt verstanden, dass bei ungünstigen Verhältnissen niedermolekulare Verbindungen aus den Klebebändern ausgasen können und an kalten Teilen kondensieren. Dadurch kann beispielsweise die Sicht durch die Windschutzscheibe beeinträchtigt werden.

Als Klebemasse ist eine solche auf Acrylathotmelt-Basis geeignet, die einen K-Wert von mindestens 20 aufweist, insbesondere größer 30 (gemessen jeweils in 1 Gew.-%iger Lösung in Toluol, 25 °C), erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungs-Extruder bevorzugt.

Eine derartige Klebemasse ist in der DE 43 13 008 C2 dargelegt. Diesen auf diesem Wege hergestellten Acrylatmassen wird in einem Zwischenschritt das Lösungsmittel vollständig entzogen. Der K-Wert wird dabei insbesondere bestimmt in Analogie zu DIN 53 726.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt.

In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A beschrieben.

Die Klebemasse auf Acrylathotmelt-Basis kann UV-vernetzt werden. Andere Vernetzungsarten sind aber auch möglich, zum Beispiel die Elektronenstrahlenvernetzung.

In einer weiteren bevorzugten Ausführungsform werden als Selbstklebemassen Copolymerisate aus (Meth) acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal®, insbesondere acResin A 260UV, von der BASF geführt wird. Diese Klebemasse mit niedrigem K-Wert erhält ihre anwendungsgerechten Eigenschaften durch eine abschließende strahlenchemisch ausgelöste Vernetzung.

Weitere hervorragend geeignete Klebemassen werden in der EP 3 540 024 A1, der EP 2 520 627 A1, der EP 2 522 705 A1, der EP 2 520 628 A1, der EP 2 695 926 A1 und der EP 2 520 629 A1 beschrieben.

Ebenfalls bevorzugt besteht die Klebebeschichtung aus einer Klebmasse auf Basis Synthesekautschuk, nämlich insbesondere eine Klebemasse aus mindestens einem Vinylaromaten-Block-Copolymer und zumindest einem Klebharz. Typische Einsatzkonzentrationen für das Blockcopolymer liegen in einer Konzentration im Bereich zwischen 30 Gew.-% und 70 Gew.-%, insbesondere im Bereich zwischen 35 Gew.-% und 55 Gew.-%.

Als weitere Polymere können solche auf Basis reiner Kohlenwasserstoffe wie zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine vorhanden sein, welche die vinylaromatenhaltigen Blockcopolymere bis zur Hälfte ersetzen können.

Als Klebrigmacher dienen Klebharze, die mit dem Elastomerblock der Styrolblockcopolymere verträglich sind.

Plastifizierungsmittel wie zum Beispiel Flüssigharze, Weichmacheröle oder niedermolekulare flüssige Polymere wie zum Beispiel niedermolekulare Polyisobutylene mit Molmassen < 1500 g/mol (Zahlenmittel) oder flüssige EPDM-Typen werden typischerweise eingesetzt.

Als weitere Additive können allen genannten Typen von Klebemassen Lichtschutzmittel wie zum Beispiel UV-Absorber, sterisch gehinderte Amine, Antiozonantien, Metalldesaktivatoren, Verarbeitungshilfsmittel, endblockverstärkende Harze zugesetzt werden.

Füllstoffe wie zum Beispiel Siliziumdioxid, Glas (gemahlen oder in Form von Kugeln als Voll- oder Hohlkugeln), Mikroballons, Aluminiumoxide, Zinkoxide, Calciumcarbonate, Titandioxide, Ruße, Silikate und Kreide, um nur einige zu nennen, ebenso Farbpigmente und Farbstoffe sowie optische Aufheller können ebenfalls Verwendung finden.

Üblicherweise werden Haftklebemassen primäre und sekundäre Antioxidantien zugesetzt, um ihre Alterungsstabilität zu verbessern. Primäre Antioxidantien reagieren dabei mit Oxi- und Peroxiradikalen, die sich in Gegenwart von Sauerstoff bilden können, und reagieren mit diesen zu weniger reaktiven Verbindungen. Sekundäre Antioxidantien reduzieren zum Beispiel Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte.

Ist eine Schwerentflammbarkeit des beschriebenen Klebebands erwünscht, lässt sich diese erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Die Herstellung und Verarbeitung der Haftklebemassen kann aus Lösung, Dispersion sowie aus der Schmelze erfolgen. Bevorzugte Herstell- und Verarbeitungsverfahren erfolgen aus der Schmelze. Für den letzteren Fall umfassen geeignete Herstellprozesse sowohl Batchverfahren als auch kontinuierliche Verfahren.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte und dergleichen, letztlich auch Stanzlinge oder Etiketten. Das Klebeband weist somit eine Längsausdehnung und eine Breitenausdehnung auf. Das Klebeband weist auch eine senkrecht zu beiden Ausdehnungen verlaufende Dicke auf, wobei die Breitenausdehnung und Längsausdehnung um ein Vielfaches größer sind als die Dicke. Die Dicke ist über die gesamte durch Länge und Breite bestimmte Flächenausdehnung des Klebebands möglichst gleich, vorzugsweise exakt gleich.

Das Klebeband liegt insbesondere in Bahnform vor. Unter einer Bahn wird ein Objekt verstanden, dessen Länge

um ein Vielfaches größer ist als die Breite und die Breite entlang der gesamten Länge in etwa vorzugsweise genau gleich bleibend ausgebildet ist.

Das Klebeband kann in Form einer Rolle, also in Form einer archimedischen Spirale auf sich selbst aufgerollt, hergestellt werden.

Auf der freiliegenden Oberseite des Trägers kann ein Rückseitenlack (Funktionsschicht) aufgetragen sein, um die Abrolleigenschaften des zur archimedischen Spirale gewickelten Klebebandes günstig zu beeinflussen. Dieser Rückseitenlack kann dazu Silikon- oder Fluorsilikonverbindungen sowie Polyvinylstearylcarbamat, Polyethyleniminstearylcarbamid oder fluororganische Verbindungen als dehäsiv wirkende Stoffe enthalten.

Die Klebemasse kann in Längsrichtung des Klebebands in Form eines Streifens aufgebracht sein, der eine geringere Breite aufweist als der erste Träger.

Je nach Verwendungsfall können auch mehrere parallele Streifen des Klebers auf dem Trägermaterial beschichtet sein.

Die Lage des Streifens auf dem Träger ist frei wählbar, wobei eine Anordnung direkt an einer der Kanten des Trägers bevorzugt wird.

Bevorzugt ist die Klebemasse vollflächig auf dem ersten Träger aufgetragen.

Auf der Klebebeschichtung des Trägers kann zumindest ein Streifen einer Eindeckung vorgesehen sein, der oder die sich in Längsrichtung des Klebebands erstrecken und der oder die zwischen 20 % und 90 % der Klebebeschichtung abdecken.

Bevorzugt deckt der Streifen insgesamt zwischen 50 % und 80 % der Klebebeschichtung ab. Der Abdeckungsgrad ist gewählt in Abhängigkeit von der Anwendung und von dem Durchmesser des Kabelsatzes.

Die angegebenen Prozentzahlen beziehen sich auf die Breite der Streifen der Eindeckung in Bezug auf die Breite des Trägers.

Gemäß einer bevorzugten Ausführungsform der Erfindung ist genau ein Streifen der Eindeckung auf der Klebebeschichtung vorhanden.

Die Lage des Streifens auf der Klebebeschichtung ist frei wählbar, wobei eine Anordnung direkt an einer der Längskanten des Trägers bevorzugt wird. Auf diese Weise ergibt sich ein in Längsrichtung des Klebebands erstreckender Klebestreifen, der mit der anderen Längskante des Trägers abschließt.

Wird das Klebeband zur Ummantelung eines Kabelbaums eingesetzt, indem das Klebeband in einer schraubenlinienförmigen Bewegung um den Kabelbaum geführt wird, kann die Umhüllung des Kabelbaums so erfolgen, dass die Klebemasse des Klebebands nur auf dem Klebeband selbst verklebt wird, während das Gut mit keinem Kleber in Berührung kommt.

Der so ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Falls eine gewisse Fixierung des Klebebands auf dem Gut gewünscht wird, kann die Ummantelung derartig erfolgen, dass der Klebestreifen zu einem Teil auf dem Klebeband selbst und zu einem anderen Teil auf dem Gut verklebt wird.

Gemäß einer anderen vorteilhaften Ausführungsform ist der Streifen mittig auf der Klebebeschichtung aufgebracht, so dass sich zwei an den Längskanten des Trägers in Längsrichtung des Klebebands erstreckende Klebestreifen ergeben.

Für das sichere und wirtschaftliche Aufbringen des Klebebands in besagter schraubenlinienförmiger Bewegung um den Kabelbaum und gegen das Verrutschen der sich ergebenden Schutzumhüllung sind die zwei jeweils an den Längskanten des Klebebands vorhandenen Klebestreifen vorteilhaft, insbesondere wenn einer, der meist schmaler als der zweite Streifen ist, als Fixierungshilfe dient und der zweite, breitere Streifen als Verschluss dient. Auf diese Weise ist das Klebeband so auf dem Kabel verklebt, dass der Kabelsatz gegen Verrutschen gesichert und dennoch flexibel gestaltet ist.

Daneben gibt es Ausführungsformen, bei denen mehr als ein Streifen der Eindeckung auf der Klebebeschichtung aufgebracht sind. Wenn lediglich von einem Streifen die Rede ist, liest der Fachmann in Gedanken mit, dass durchaus auch mehrere Streifen gleichzeitig die Klebebeschichtung eindecken können.

Der Herstellprozess des erfindungsgemäßen Klebebandes erschöpft sich in der Beschichtung des Trägers direkt mit der Dispersion in einem oder mehreren nacheinander durchgeführten Arbeitsgängen. Im Falle von textilen Trägern kann das unbehandelte Textil direkt oder im Transferverfahren beschichtet werden. Alternativ kann das Textil mit einer Beschichtung vorbehandelt werden (mit beliebigem filmbildendem Stoff aus Lösung, Dispersion, Schmelze und/oder strahlenhärtend), um dann in einem nachgeschalteten Arbeitsschritt direkt oder im Transferverfahren mit der Haftklebemasse versehen zu werden.

Als Auftragsaggregate werden die üblichen eingesetzt: Drahtrakel, Streichbalken, Walzenauftrag, Düsenbeschichtung, Doppelkammerrakel, Mehrfachkaskadendüse.

Gemäß einer bevorzugten Ausführungsform der Erfindung ist die Klebemasse nach dem Aufbringen auf den

Träger zu mehr als 10 %, vorzugsweise zu mehr als 25 %, weiter vorzugsweise zu mehr als 50 % in den Träger eingesunken. Ein Zahlenwert von beispielsweise 25 % bedeutet dabei, dass die Klebemasse über eine Schichtdicke von 25 % der Dicke des textilen Trägers eingedrungen ist, also bei einem Träger mit einer Dicke von 100 μm über eine Schichtdicke von 25 μm innerhalb des Trägers, und zwar beginnend von der Fläche des Trägers, auf der die Klebemasse beschichtet ist, und in senkrechter Richtung zu der von der Längs- beziehungsweise Quererrichtung aufgespannten Ebene.

Aufgrund der geschilderten positiven Eigenschaften lässt sich das Klebeband hervorragend zum Isolieren und Wickeln von Drähten oder Kabeln verwenden.

Vorzugsweise wird das Klebeband zum Ummanteln von langgestrecktem Gut wie insbesondere Kabelsätzen eingesetzt, wobei das Klebeband in einer schraubenförmigen Bewegung um das langgestreckte Gut geführt wird. Es ergibt sich die Form einer Helix (auch Schraube, Schraubenlinie, zylindrische Spirale oder Wendel genannt; Helix ist eine Kurve, die sich mit konstanter Steigung um den Mantel eines Zylinders windet).

In einer Variante wird das langgestreckte Gut in axialer Richtung von dem Klebeband umhüllt. Die Umwicklung eines Kabelbaums mit dem beschriebenen Klebeband erfolgt dabei nicht - wie üblich - schraubenlinienförmig, sondern derart, dass beim Umwickeln eine Längsachse des Bandes im Wesentlichen parallel zur Verlaufsrichtung des Kabelbaums ausgerichtet ist. Im Querschnitt gesehen liegt das Klebeband dabei in Form einer archimedischen Spirale um den Kabelbaum. Diese Art der Wicklung wird auch "Einschlagen des Kabelbaums" genannt.

Ebenfalls vom erfinderischen Gedanken umfasst ist ein ummanteltes langgestrecktes Gut, wie insbesondere ein Kabelsatz, ummantelt mit einem erfindungsgemäßen Klebeband, sowie ein Fahrzeug, enthaltend ein derartig ummanteltes langgestrecktes Gut.

Gemäß einer Ausführungsform der Erfindung handelt es sich bei dem langgestreckten Gut um einen Kabelstrang, der ein Bündel aus mehreren Kabeln wie 3 bis 1000 Kabeln, bevorzugt 10 bis 500 Kabeln, insbesondere zwischen 50 und 300 Kabeln umfasst.

Aufgrund der hervorragenden Eignung des Klebebandes kann es in einer Ummantelung Verwendung finden, die aus einer Eindeckung besteht, bei der zumindest in einem Kantenbereich der Eindeckung das selbstklebend ausgerüstete Klebeband vorhanden ist, das so auf der Eindeckung verklebt ist, dass sich das Klebeband über eine der Längskanten der Eindeckung erstreckt, und zwar vorzugsweise in einem im Vergleich zur Breite der Eindeckung schmalen Kantenbereich.

Ein derartiges Produkt sowie optimierte Ausführungsformen desselben werden in der EP 1 312 097 A1 offenbart. In der EP 1 300 452 A2, der DE 102 29 527 A1 sowie der WO 2006/108871 A1 werden Weiterentwicklungen dargestellt, für die das erfindungsgemäße Klebeband ebenfalls sehr gut geeignet ist. Ebenso kann das erfindungsgemäße Klebeband in einem Verfahren Verwendung finden, wie es die EP 1 367 608 A2 offenbart.

Schließlich beschreiben die EP 1 315 781 A1 sowie die DE 103 29 994 A1 Ausführungsformen von Klebebändern, wie sie auch für das erfindungsgemäße Klebeband möglich sind.

Um die richtige Anwendung des Klebebands insbesondere an Kabelbäumen sicherzustellen, kann zumindest eine in Längsrichtung verlaufende Kennzeichnungslinie auf der Oberseite des Trägers vorhanden sein. Bevorzugt sind zwei Kennzeichnungslinien. Diese Kennzeichnungslinien unterscheiden sich optisch und/oder haptisch von der sie umgebenden Oberfläche.

Die Markierung ist auf den Träger aufgebracht, beispielsweise durch Drucken. Alternativ oder zusätzlich kann aber auch so vorgegangen werden, dass die Markierung in den ersten Träger eingearbeitet ist. So lässt sich die Markierung als gleichsam eingewebter Kettfaden realisieren. Die EP 3 245 265 A1 beschreibt die Verwendung einer derartigen Kennzeichnungslinie auf einem Klebeband.

Um ein besonders einfaches Arbeiten für den Anwender zu ermöglichen, sind Perforationen in dem Klebeband vorhanden, die insbesondere rechtwinklig zur Laufrichtung des Klebebands ausgerichtet und/oder in regelmäßigen Abständen angeordnet sind.

Die Perforation dient dabei in erster Linie als Abreißhilfe zur Ablängung auf die vorgegebene Länge. In dem Stück des Klebebands, das das Gut ummantelt, sollten keine Perforationen vorhanden sein, um keine negativen Auswirkungen auf die Abschirmungseigenschaften zu haben.

Besonders vorteilhaft lassen sich die Perforationen diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.

Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrein zu erzielen, beispielsweise konkav oder konvex ausgeformte Schneidkanten.

Das Klebeband ist flexibel auf unterschiedlichen Kabeldurchmessern einsetzbar.

Mittels der vorteilhaften Kennzeichnung lässt sicher und einfach die fachgerechte Anwendung des Klebebands prüfen.

Das erfindungsgemäße Klebeband kann in den bekannten und üblichen Prozessen bei der der Kabelbandagierung aufgebracht werden.

Im Folgenden soll das Klebeband anhand mehrerer Figuren näher erläutert werden, ohne damit eine wie auch immer geartete Einschränkung hervorrufen zu wollen.

Es zeigen

Figur 1 das Klebeband im seitlichen Schnitt,

Figur 2 einen Ausschnitt eines Kabelbaums, der sich aus einer Bündelung von einzelnen Kabeln zusammensetzt und der mit dem erfindungsgemäßen Klebeband ummantelt ist, und

Figur 3 eine vorteilhafte Anwendung des Klebebands.

In der Figur 1 ist im Schnitt in Querrichtung (Querschnitt) das Klebeband gezeigt, das aus einem Gewebeträger 1 besteht, auf den einseitig eine Schicht einer selbstklebenden Beschichtung 2 auf Basis einer Acrylatdispersion aufgebracht ist.

Die Klebemasse ist zu 20 % in den Träger eingesunken, was eine optimale Verankerung bewirkt und gleichzeitig die Handeinreißbarkeit des Trägers verbessert.

In der Figur 2 ist ein Ausschnitt eines Kabelbaums gezeigt, der sich aus einer Bündelung von einzelnen Kabeln 7 zusammensetzt und der mit dem erfindungsgemäßen Klebeband 11 ummantelt ist. Das Klebeband wird in einer schraubenlinienförmigen Bewegung um den Kabelbaum geführt.

Der gezeigte Ausschnitt des Kabelbaums zeigt zwei Wicklungen I und II des Klebebands. Nach links hin würden sich weitere Wicklungen erstrecken, diese sind hier nicht dargestellt.

In einer weiteren Ausführungsform für eine Ummantelung werden zwei mit einer Klebemasse ausgerüstete erfindungsgemäße Bänder 60, 70 mit ihren Klebemassen versetzt (bevorzugt um jeweils 50 %) aufeinander laminiert, so dass sich ein Produkt ergibt, wie es in Figur 3 dargestellt ist. nicht erfindungsgemäße **Beispiele**

*Skizze der Beispiele*

Das erfindungsgemäße Klebeband wird nachfolgend in bevorzugter Ausführung anhand eines Beispiels beschrieben, ohne damit die Erfindung irgendeiner Beschränkung unterwerfen zu wollen. Des Weiteren ist ein Vergleichsbeispiel aufgeführt, in dem ein Klebeband dargestellt ist, das eine signifikant schlechtere Performance zeigt.

Auf einen Vliesträger wird eine acrylatbasierende Beispielhaftklebemasse aufgebracht, so dass ein Klebemassenflächengewicht von 55 $g/m^2$ resultiert.

Bei dem Vlies handelt es sich um ein Nähwirkvlies vom Typ Maliwatt mit einem Flächengewicht von 72 $g/m^2$, bestehend aus PET-Fasern der Länge 64 mm und der Dicke 3 den und einem PET-Nähfaden der Stärke 50 dtex, die mit (22 Fäden pro Inch (entspricht 9 Fäden/Zentimeter Vliesbreite) vernäht sind.

Beim erfindungsgemäßen Beispiel B2 bestehen die PET-Fasern zu 50 Gew.-% aus recycelten und zu 50 Gew.-% aus nichtrecycelten PET-Fasern, beim erfindungsgemäßen Beispiel B3 zu 79 Gew.-% aus recycelten und zu 21 Gew.-% aus nichtrecycelten PET-Fasern, beim Vergleichsbeispiel (B1) zu 100 Gew.-% aus nichtrecycelten PET-Fasern.

| | | Abriebbeständigkeit Rohträger 5 mm Dorn [Doppelhübe] | Lagerung | | Klebkraft Stahl [N/cm] | Klebkaft Rückseite [N/cm] | Abrollkraft 0,3 m/min [N/cm] | Abrollkraft 30 m/min [N/cm] | Höchstzugkraft [N/cm] | Reißdehnung [%] | Geräuschdämpfung Analog VW60360 [dB(A)] | Abriebbeständigkeit Tape analog ISO6722; 7N; 5 mm Stangen-durchmesser [Doppelhübe] | Flagging (SWAT) 1 mm ETFE Kabel 30d | | Thermische Kurzzeitalterung analog VW60360; 130 °C |
|---|---|---|---|---|---|---|---|---|---|---|---|---|---|---|---|
| | | | Wochen | Temp. [°C] | | | | | | | | | RT | 40°C | |
| **B1** | Standard | 5 | Frisch | | **3** | **4,4** | **1,7** | **5,9** | **36** | **20** | **6,1** | **37** | 1 | **0** | Test passed |
| | | | 4 Wo | 40 | **2,9** | **5,4** | **1,6** | **6,1** | | | | | 3 | **13** | |
| **B2** | **50% Recyceltes PET** | 7 | Frisch | | **3,3** | **4,7** | **1,5** | **6,0** | **32** | **20** | **6** | **49** | 0 | **0** | Test passed |
| | | | 4 Wo | 40 | **2,9** | **4,9** | **2,1** | **5,7** | | | | | 0 | **8** | |
| **B3** | **79% Recyceltes PET** | 8 | Frisch | | **3,1** | **4,5** | **1,7** | **5,5** | **36** | **22** | **6,4** | **58** | 0 | **0** | Test passed |
| | | | 4 Wo | 40 | **3,2** | **5,3** | **1,7** | **6** | | | | | 1 | **5** | |

Während die meisten technischen und Applikationstests ein vergleichbares Leistungsspektrum aufweisen, ist auffällig, dass wider Erwarten ein textiler Träger, bei dem die Fasern aus recycelten Fasern bestehen, bessere Abriebwerte aufweist als ein Träger, bei dem nichtrecycelte Fasern verwendet werden. Des Weiteren zeigt sich auch beim Flagging, hier beschrieben als Single Wire Application Test (SWAT-Test), dass, nach einem Testzeitraum von 30 Tagen bei 40 °C, vollkommen überraschend ein deutlich geringeres Abheben des Klebebandes zu sehen ist, das sich nach Schnellalterung der Rollen für 4 Wochen bei 40 °C zeigt.

**Beurteilungskriterien**

**Durchführung der Tests**

Die Messungen werden - soweit nicht ausdrücklich anders erwähnt - bei einem Prüfklima von 23 ± 1 °C und 50 ± 5 % rel. Luftfeuchte durchgeführt.

*Messung der Abflaggresistenz nach der SWAT-Methode*

Der SWAT-Test wird genutzt, um das Flaggingverhalten von Klebebändern zu untersuchen, nachdem diese spiralförmig um ein Kabel gewickelt worden sind.

Der Test wird unter Normklima (23 ± 1 °C und 50 ± 5 % rel. Luftfeuchte) und 40 °C durchgeführt. Die erhöhte Temperatur simuliert die erschwerten Anforderungen während des Transports.

Für den Test wird ein 19 mm breites Klebeband verwendet. Dieses wird manuell um ein mit ETFE (Ethylen-Tetrafluorethylen) ummanteltes Kabel, das einen Durchmesser von 1 mm aufweist, viermal (1440°) ohne zusätzlichen Druck gewickelt. Das Klebeband wird mit einer Schere geschnitten.

Es wird angenommen, dass eine durchschnittlich 5 mm lange Fahne verbleibt, wenn das Klebbandende nicht runtergepresst wird.

Insgesamt werden sieben Wicklungen um das Kabel erzeugt.

Es werden die Fahnen nach drei Tagen, zehn Tagen und 30 Tagen bei Normklima mit Hilfe eines Lineals vermessen. Dies zeigt die Figur 4. Der absolute Flaggingwert wird berechnet, indem von der tatsächlich gemessenen Länge der Fahne 5 mm abgezogen werden.

In Figur 4 beträgt der Flaggingwert somit 23 mm (28 mm - 5 mm).

Der Flaggingwert, der als Ergebnis angegeben wird, ist das Ergebnis des Mittelwerts des Flaggingwerte der sieben Wicklungen. Analog wird der Test bei 40 °C in üblichen Trockenschränken durchgeführt.

Im Folgenden wird das erfindungsgemäße Klebeband bei 40 °C im Trockenschrank nach der angegebenen SWAT-Methode bewertet.

*Messung der Klebkraft auf Stahl und auf Bandrücken*

Die Durchführung der Messung erfolgt analog dem in dem Änderungsvorschlag zur VW 60360-1 angegebenen Messmethode, das heißt, die Prüfung erfolgt zum einen in Anlehnung an DIN EN 1939 auf Stahl (Verfahren 1, 180°-Prüfung) und zum anderen auf dem Bandrücken (Verfahren 2, 180°-Prüfung).

*Abrollkraft*

Die Messung der Abrollkraft erfolgt nach dem Änderungsvorschlag zur VW 60360-1 "Schutzsysteme für Leitungssätze - Klebebänder": 2019-10 bei einer Abzugsgeschwindigkeit von 0,3 m/min beziehungsweise von 30 m/min.
*Messung der Geräuschdämpfung nach dem Änderungsvorschlag zur VW 60360-1* "Schutzsysteme *für Leitungssätze - Klebebänder": 2019-10*
Die Messung der Geräuschdämpfung erfolgt nach dem Änderungsvorschlag zur VW 60360-1 "Schutzsysteme für Leitungssätze - Klebebänder": 2019-10.

*Thermische Kurzzeitalterung*

Die Messung der thermische Kurzzeitalterung erfolgt nach dem Änderungsvorschlag zur VW 60360-1 "Schutzsysteme für Leitungssätze - Klebebänder": 2019-10. Die Messungen erfolgen jeweils bei 130 °C (Temperaturklasse B).

*Erweichungspunkt*

Unter dem Erweichungspunkt versteht man die Temperatur (beziehungsweise den Temperaturbereich), bei dem amorphe oder teilkristalline Polymere vom glasigen, hartelastischen in einen weichen Zustand übergehen. Die Verminderung der Härte entsprechender Stoffe am Erweichungspunkt wird zum Beispiel dadurch deutlich, dass ein auf eine Stoffprobe unter Belastung aufgesetzter Körper bei Erreichen des Erweichungspunktes in diese eingedrückt wird. Der Erweichungspunkt liegt grundsätzlich oberhalb der Glasübergangstemperatur, bei den meisten Polymeren jedoch deutlich unterhalb der Temperatur, bei der diese vollständig in den flüssigen Zustand übergehen.
Die Messung des Erweichungspunktes erfolgt nach der ASTM E28-99 (2009), bekannt als Ring & Ball-Methodik (R&B).

*Messung der Glasübergangstemperaturen*

Die Glasübergangstemperaturen wurden auf dem Dynamischen Differenzkalorimeter-Gerät DSC 204 F1 "Phönix" der Firma Netzsch, Deutschland, in 25 µl Aluminiumtiegeln mit gelochtem Deckel unter Stickstoffatmosphäre (20 ml/min Gasfluss) bestimmt. Die Probeneinwaage betrug 8 ± 1 mg. Die Proben wurden zweimal von -140 °C bis auf 200 °C mit einer Heizrate von 10 K/min vermessen. Ausgewertet wurde die 2. Aufheizkurve.
Die Methode lehnt sich an die DIN 53 765 an.

*Dynamische Viskositätsmessung*

Die Viskositätsmessung wird mit einem Rheometer des Typs DSR 200 N der Firma Rheometric Scientific bei Raumtemperatur und im Rotationsmodus bei einer Schergeschwindigkeit von $0{,}01 s^{-1}$ mit einem Kegel-Platte-System mit einem Durchmesser von 25 mm durchgeführt, alternativ mit einer Schergeschwindigkeit von $10 s^{-1}$.

*Gelwert*

Der Gelwert wird durch Soxhlet-Extraktion ermittelt, über die in kontinuierlicher Extraktion lösliche Inhaltsstoffe aus Polymeren extrahiert werden. Im Falle der Gelwertbestimmung von (wässrigen) Polyacrylat-Haftklebmassen werden durch ein geeignetes Lösemittel wie zum Beispiel Tetrahydrofuran die löslichen Anteile eines Polymers - des sogenannten Sols - von den unlöslichen Anteilen - dem sogenannten Gel - extrahiert. Vorbereitung: Die zu extrahierende Masse wird auf silikonisiertem Trennpapier in einem dünnen Film aufgetragen - in der Regel 120 µm Schichtdicke - und circa 12 h bei 80 °C getrocknet (Umlufttrockenschrank). Aufbewahrt werden die Filme im Exsikkator über Trocknungsmittel. Die Extraktionshülsen Typ 603 Whatman werden 12 h bei 80 °C getrocknet, das Leergewicht der Hülsen bestimmt und im Exsikkator bis zur Verwendung gelagert.

*Gelwertbestimmung*

Ca. 1 g Haftklebemasse wird in Extraktionshülse eingewogen. Ein 100 ml Rundkolben der Soxhlet-Apparatur wird mit 60 ml Tetrahydrofuran gefüllt und zum Sieden erhitzt. THF-Dämpfe steigen durch das Dampfrohr der Soxhlet-Apparatur auf und kondensieren im Kühler und THF tropft in die Extraktionshülse und extrahiert Sol Anteil. Im Verlauf der Extraktion läuft das THF I mit dem extrahierten Sol zurück in den Kolben. Gelöstes Sol reichert sich im Kolben zunehmend an. Nach 72 h kontinuierlicher Extraktion ist das Sol vollständig im THF gelöst. Die Extraktionshülse wird nun - nach Abkühlung der Apparatur auf Raumtemperatur - entnommen und über 12 h bei 80 °C getrocknet. Die Hülsen werden bis

zur Massekonstanz im Exsikkator aufbewahrt und anschließend ausgewogen.

Der Gelwert des Polymers berechnet sich anhand folgender Formel:

$$Gelwert = \frac{m_3 - m_1}{m_2 - m_1} \cdot 100\,\%$$

mit $m_1$: Masse Extraktionshülse, leer
$m_2$: Masse Extraktionshülse + Polymer
$m_3$: Masse Extraktionshülse + Gel

*Biegesteifigkeit*

Die Biegesteifigkeit wird mit einem Softometer KWS basic 2000mN (Firma Wolf Messtechnik GmbH) bestimmt. (MD) steht für machine direction, das heißt, die Biegesteifigkeit wird in Maschinenrichtung bestimmt.

**Patentansprüche**

**1.** Klebeband insbesondere zum Umwickeln von Kabeln, umfassend einen textilen Träger und eine auf mindestens einer Seite des Trägers aufgebrachte Haftklebemasse, wobei als Ausgangsmaterialien für den textilen Träger Fasern aus recyceltem Polyethylenterephthalat verwendet werden, wobei der Anteil der recycelten Fasern mindestens 50 Gew.-% beträgt und wobei die Fasern Stapelfasern oder Endlosfilamente sind oder zu Garnen verarbeitet werden, wobei der Klebemasseauftrag, bezogen auf die Trägerfläche, zwischen 40 und 160 g/m$^2$ liegt, wobei die Fasern aus Rohmaterial hergestellt werden, das mechanisch gewaschen und danach mechanisch zu Flakes zerkleinert wird, die anschließend aufgeschmolzen und zu den Fasern verarbeitet werden.

**2.** Klebeband nach Anspruch 1,
**dadurch gekennzeichnet, dass**
der Anteil der recycelten Fasern in dem textilen Träger mehr als 50 Gew.-% beträgt, vorzugsweise 70 Gew.-% oder mehr, weiter vorzugsweise 90 Gew.-% oder mehr. weiter vorzugsweise 100 Gew.-%.

**3.** Klebeband nach Anspruch 1,
**dadurch gekennzeichnet, dass**
der Anteil der recycelten Fasern in dem textilen Träger 100 Gew.-% beträgt.

**4.** Klebeband nach zumindest einem der Ansprüche 1 bis 3,
**dadurch gekennzeichnet, dass**
der Träger ein textiler Träger ist, bevorzugt ein Vliesmaterial oder ein Gewebe.

**5.** Klebeband nach zumindest einem der vorherigen Ansprüche,
**dadurch gekennzeichnet, dass**
als textiles Trägermaterial Nähwirkstoffe, also textile Flächengebilde, die durch Maschenbildung eingebundener Wirkfäden in ein flächiges Grundmaterial hergestellt sind, verwendet werden, bevorzugt Vlies-Nähwirkstoffe, also textile Flächengebilde mit Faservlies als Grundmaterial, die durch Maschenbildung eingebundener Wirkfäden verfestigt sind oder durch Übersteppen mit zusätzlichem Nähgarn.

**6.** Klebeband nach zumindest einem der Ansprüche 1 bis 4,
**dadurch gekennzeichnet, dass**
als textiles Trägermaterial Vlieswirkstoffe, also textile Flächengebilde, die ohne Verwendung von Fäden durch Bildung von Fasermaschen aus vorgelegtem Faservlies hergestellt sind, verwendet werden, bevorzugt Vlies-Nähwirkstoffe, also textile Flächengebilde mit Faservlies als Grundmaterial, die durch Maschenbildung eingebundener Wirkfäden verfestigt sind.

**7.** Klebeband nach Anspruch 5,
**dadurch gekennzeichnet, dass**
als textiles Trägermaterial als Vlies-Nähwirkstoffe Maliwatte verwendet werden, vorzugsweise mit einem Flächengewicht von 50 bis 200 g/m$^2$ insbesondere 65 bis 190 g/m$^2$, mit einer Faserstärke von 2 bis 5 denier, einer Faserlänge

von 30 bis 90 mm und/oder einer Nähfadenanzahl von 15 bis 25 Fäden/ 25 mm.

**8.** Klebeband nach zumindest einem der Ansprüche 1 bis 4,
**dadurch gekennzeichnet, dass**
der Träger Gewebe, ist und weiter vorzugsweise aufgebaut ist wie folgt:

- die Fadenzahl in der Kette 10 bis 60/cm beträgt
- die Fadenzahl im Schuss 10 bis 40/cm beträgt
- die Kettfäden ein Garngewicht zwischen 40 und 400 dtex, insbesondere zwischen 44 und 330 dtex, besonders bevorzugt von 167 dtex besitzen
- die Schussfäden ein Garngewicht zwischen 40 und 660 dtex, insbesondere zwischen 44 und 400 dtex, besonders bevorzugt von 167 dtex besitzen

**9.** Klebeband nach zumindest einem der vorherigen Ansprüche,
**dadurch gekennzeichnet, dass**
der Klebemasseauftrag, bezogen auf die Trägerfläche, zwischen 50 und 100 g/$m^2$, vorzugsweise zwischen 50 und 90 g/$m^2$ liegt.

**10.** Klebeband nach zumindest einem der vorigen Ansprüche,
**dadurch gekennzeichnet, dass**
die Klebebeschichtung eine selbstklebende Klebebeschichtung ist, vorzugsweise auf Basis von Natur- und/oder Synthesekautschuk, Acrylat oder Silikon.

**11.** Verwendung eines Klebebandes nach zumindest einem der vorherigen Ansprüche zum Ummanteln von langgestrecktem Gut, wobei das Klebeband in einer Schraubenlinie um das langgestreckte Gut geführt wird.

**12.** Verwendung eines Klebebandes nach zumindest einem der Ansprüche 1 bis 10 zum Ummanteln von langgestrecktem Gut, wobei das langgestreckte Gut in axialer Richtung von dem Band umhüllt wird.

**13.** Langgestrecktes Gut, wie insbesondere ein Kabelsatz, ummantelt mit einem Klebeband nach zumindest einem der vorherigen Ansprüche.

**14.** Fahrzeug, enthaltend ummanteltes langgestrecktes Gut nach Anspruch 13.

## Claims

**1.** Adhesive tape particularly for wrapping cables, comprising a textile carrier and a pressure-sensitive adhesive applied on at least one side of the carrier, where starting materials used for the textile carrier comprise fibres of recycled polyethylene terephthalate, where the fraction of the recycled fibres is at least 50 wt% and where the fibres are staple fibres or continuous filaments or are processed to form yarns, where the adhesive coatweight, based on the carrier area, is between 40 and 160 g/$m^2$,
where the fibres are produced from raw material which is mechanically washed and thereafter comminuted mechanically into flakes, which are subsequently melted and processed to form the fibres.

**2.** Adhesive tape according to Claim 1,
**characterized in that**
the fraction of the recycled fibres in the textile carrier is more than 50 wt%, preferably 70 wt% or more, more preferably 90 wt% or more, more preferably 100 wt%.

**3.** Adhesive tape according to Claim 1,
**characterized in that**
the fraction of the recycled fibres in the textile carrier is 100 wt%.

**4.** Adhesive tape according to at least one of Claims 1 to 3,
**characterized in that**
the carrier is a textile carrier, preferably a nonwoven material or a woven fabric.

**5.** Adhesive tape according to at least one of the preceding claims,
**characterized in that**
the textile carrier material used comprises stitchbonded fabrics, these being textile sheetlike structures which are produced by looping of incorporated knitting threads into a sheetlike base material, and preferably stitchbonded nonwovens, these being textile sheetlike structures with fibre nonwoven as base material which are consolidated by looping of incorporated knitting threads, or by overstitching with additional stitching yarn.

**6.** Adhesive tape according to at least one of Claims 1 to 4,
**characterized in that**
the textile carrier material used comprises knit-bonded nonwovens, these being textile sheetlike structures which are produced, without using threads, by formation of fibre loops from primary fibre nonwoven, and preferably stitchbonded nonwovens, these being textile sheetlike structures with fibre nonwoven as base material which are consolidated by looping of incorporated knitting threads.

**7.** Adhesive tape according to Claim 5,
**characterized in that**
the textile carrier material used comprises stitchbonded nonwovens in the form of Maliwatts, preferably having a basis weight of 50 to 200 g/$m^2$, more particularly 65 to 190 g/$m^2$, having a linear fibre density of 2 to 5 denier, a fibre length of 30 to 90 mm and/or a stitching thread count of 15 to 25 threads/25 mm.

**8.** Adhesive tape according to at least one of Claims 1 to 4,
**characterized in that**
the carrier is woven fabric and more preferably is constructed as follows:

- the thread count in the warp is 10 to 60/cm
- the thread count in the weft is 10 to 40/cm
- the warp threads possess a yarn weight of between 40 and 400 dtex, more particularly between 44 and 330 dtex, very preferably of 167 dtex
- the weft threads possess a yarn weight of between 40 and 660 dtex, more particularly between 44 and 400 dtex, very preferably of 167 dtex.

**9.** Adhesive tape according to at least one of the preceding claims,
**characterized in that**
the adhesive coatweight, based on the carrier area, is between 50 and 100 g/$m^2$, preferably between 50 and 90 g/$m^2$.

**10.** Adhesive tape according to at least one of the preceding claims,
**characterized in that**
the adhesive coating is a self-adhesive coating, preferably based on natural rubber and/or synthetic rubber, acrylate or silicone.

**11.** Use of an adhesive tape according to at least one of the preceding claims for jacketing an elongate item, the adhesive tape being guided in a helical line around the elongate item.

**12.** Use of an adhesive tape according to at least one of Claims 1 to 10 for jacketing an elongate item, the elongate item being enveloped in an axial direction by the tape.

**13.** Elongate item, such as in particular a cable harness, jacketed with an adhesive tape according to at least one of the preceding claims.

**14.** Vehicle comprising a jacketed elongate item according to Claim 13.

## Revendications

**1.** Ruban adhésif destiné notamment à l'enroulement de câbles, comprenant un support textile et une masse adhésive appliquée sur au moins un côté du support, dans lequel on utilise comme matières premières pour le support textile des fibres en polyéthylène téréphtalate recyclé, la proportion de fibres recyclées étant d'au moins 50 % en poids et les fibres étant des fibres discontinues ou des filaments continus ou étant transformées en fils, l'application de la masse

adhésive étant comprise entre 40 et 160 g/$m^2$ par rapport à la surface du support,
les fibres étant fabriquées à partir de matière première qui est lavée mécaniquement, puis broyée mécaniquement en flocons qui sont ensuite fondus et transformés en fibres.

**2.** Ruban adhésif selon la revendication 1, **caractérisé en ce que**
la proportion de fibres recyclées dans le support textile est supérieure à 50 % en poids, de préférence supérieure à 70 % en poids, de manière davantage préférée supérieure à 90 % en poids, de manière encore davantage préférée de 100 % en poids.

**3.** Ruban adhésif selon la revendication 1, **caractérisé en ce que**
la proportion de fibres recyclées dans le support textile est de 100 % en poids.

**4.** Ruban adhésif selon au moins l'une quelconque des revendications 1 à 3,
**caractérisé en ce que**
le support est un support textile, de préférence un matériau non tissé ou un tissu.

**5.** Ruban adhésif selon au moins l'une quelconque des revendications précédentes,
**caractérisé en ce que**
comme matériau support textile, on utilise des étoffes tricotées cousues, c'est-à-dire des structures textiles planes fabriquées par formation de mailles de fils de tricotage incorporés dans un matériau de base plan, de préférence des étoffes tricotées cousues non tissées, c'est-à-dire des structures textiles planes avec un non-tissé de fibres comme matériau de base, qui sont consolidées par formation de mailles de fils de tricotage incorporés ou par surpiqûre avec du fil de couture supplémentaire.

**6.** Ruban adhésif selon au moins l'une quelconque des revendications 1 à 4,
**caractérisé en ce que**
comme matériau support textile, on utilise des étoffes tricotées non tissées, c'est-à-dire des structures textiles planes fabriquées sans utiliser de fils, par formation de mailles de fibres à partir d'un non-tissé de fibres préalablement disposé, de préférence des étoffes tricotées cousues non tissées, c'est-à-dire des structures textiles planes avec un non-tissé de fibres comme matériau de base, qui sont consolidées par formation de mailles de fils de tricotage incorporés.

**7.** Ruban adhésif selon la revendication 5, **caractérisé en ce que**
comme matériau support textile, on utilise des étoffes tricotées cousues non tissées de type Maliwatt, de préférence avec un grammage surfacique de 50 à 200 g/$m^2$, notamment de 65 à 190 g/$m^2$, avec un titre de fibre de 2 à 5 deniers, une longueur de fibre de 30 à 90 mm et/ou un nombre de fils de couture de 15 à 25 fils/25 mm.

**8.** Ruban adhésif selon au moins l'une quelconque des revendications 1 à 4,
**caractérisé en ce que**
le support est un tissu et est de manière davantage préférée structuré comme suit :

- le nombre de fils dans la chaîne est de 10 à 60/cm
- le nombre de fils dans la trame est de 10 à 40/cm
- les fils de chaîne ont un poids compris entre 40 et 400 dtex, notamment entre 44 et 330 dtex, de manière particulièrement préférée de 167 dtex
- les fils de trame ont un poids compris entre 40 et 660 dtex, notamment entre 44 et 400 dtex, de manière particulièrement préférée de 167 dtex.

**9.** Ruban adhésif selon au moins l'une quelconque des revendications précédentes,
**caractérisé en ce que**
l'application de la masse adhésive, par rapport à la surface du support, est comprise entre 50 et 100 g/$m^2$, de préférence entre 50 et 90 g/$m^2$.

**10.** Ruban adhésif selon au moins l'une quelconque des revendications précédentes,
**caractérisé en ce que**
le revêtement adhésif est un revêtement autocollant, de préférence à base de caoutchouc naturel et/ou synthétique, d'acrylate ou de silicone.

**11.** Utilisation d'un ruban adhésif selon au moins l'une quelconque des revendications précédentes pour gainer un produit allongé, le ruban adhésif étant guidé en hélice autour du produit allongé.

**12.** Utilisation d'un ruban adhésif selon au moins l'une quelconque des revendications 1 à 10 pour gainer un produit allongé, le produit allongé étant gainé dans la direction axiale par le ruban.

**13.** Produit allongé, tel que notamment faisceau de câbles, gainé avec un ruban adhésif selon au moins l'une quelconque des revendications précédentes.

**14.** Véhicule, contenant un produit allongé gainé selon la revendication 13.

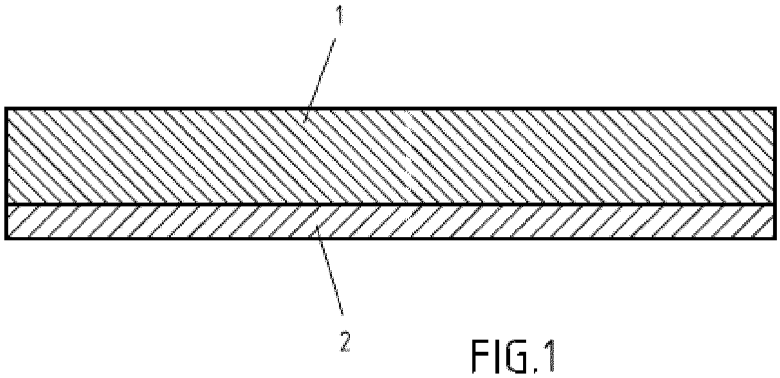


FIG.1

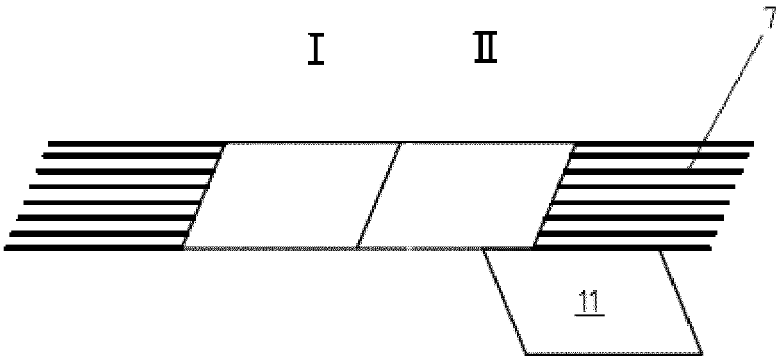


FIG.2

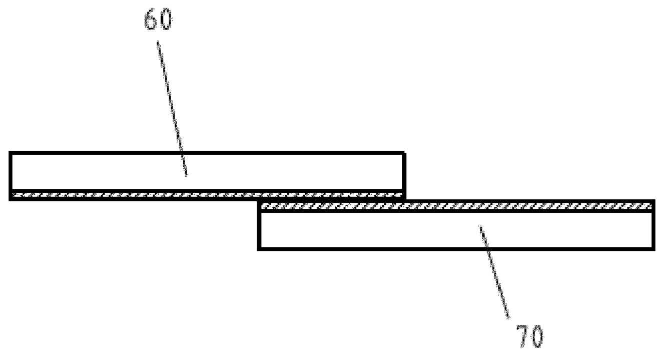


FIG.3

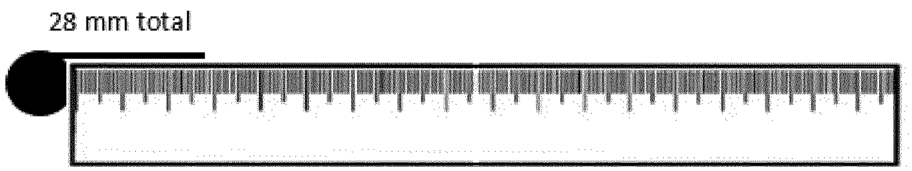


FIG. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1848006 A2
- DE 102013213726 A1
- EP 2497805 A1
- DE 102014119526 A1
- EP 0995782 A2
- WO 2006015816 A1
- EP 1431360 A2
- EP 0071212 B1
- EP 1448744 A1
- EP 1378527 B1
- DE 19807752 A1
- DE 10011788 A1
- DE 4313008 C2
- EP 0578151 A
- EP 3540024 A1
- EP 2520627 A1
- EP 2522705 A1
- EP 2520628 A1
- EP 2695926 A1
- EP 2520629 A1
- EP 1312097 A1
- EP 1300452 A2
- DE 10229527 A1
- WO 2006108871 A1
- EP 1367608 A2
- EP 1315781 A1
- DE 10329994 A1
- EP 3245265 A1


### In der Beschreibung aufgeführte Nicht-Patentliteratur


- Vliesstoffe. Georg Thieme Verlag, 1982
- Textiltechnik-Vliesstofferzeugung. Arbeitgeberkreis Gesamttextil, 1996
- **VON PETER A. LOVELL** ; **MOHAMED S. EL-AASSER**. Emulsion Polymerization and Emulsion Polymers. Wiley-VCH, 1997